# EUROPÄISCHE PATENTANMELDUNG

(11) **EP 1 710 478 A1**
(43) Veröffentlichungstag der Anmeldung: **11.10.2006**
(21) Anmeldenummer: 06004894.9
(22) Anmeldetag: 10.03.2006
(51) Int. Cl.: F16H 63/30

(54) **Elektromagnetische Schalteinrichtung für Getriebe mit zwei Elektromagneten und einem Permanentmagneten**

(30) Priorität: 09.04.2005 DE 102005016385
(71) Anmelder: Bayerische Motoren Werke Aktiengesellschaft, 80809 München (DE)
(72) Erfinder: Simkovics, Reinhard, Dr., 85356 Freising (DE)

(57) **Zusammenfassung**

Elektromagnetische Schalteinrichtung (1) für Getriebe mit einem Schaltelement (2), das in einer Axialrichtung verschieblich angeordnet ist, wobei das Schaltelement (2) mindestens eine erste und eine zweite Verschiebestellung einnehmen kann, einem Permanentmagnet (6), der in Axialrichtung magnetisiert ist und der entweder mit dem Schaltelement (2) verbunden oder ortsfest in Bezug auf das Getriebe angeordnet ist. Ferner ist ein erster und ein zweiter Elektromagnet (12,13) vorgesehen. Die Elektromagneten (12,13) sind in Axialrichtung versetzt zueinander angeordnet. Sofern der Permanentmagnet (6) mit dem Schaltelement (2) verbunden ist, sind die Elektromagneten (12,13) ortsfest in Bezug auf das Getriebe angeordnet, wenn der Permanentmagnet (6) ortsfest im Getriebe angeordnet ist, sind sie mit dem Schaltelement (2) verbunden sind. Die beiden Elektromagneten (12,13) sind derart bestrombar, dass ihre Magnetfelder einander entgegengesetzt gerichtet sind.

## Beschreibung

Die vorliegende Erfindung betrifft eine elektromagnetische Schalteinrichtung für Getriebe gemäß den Merkmalen des Patentanspruches 1.

Aus der DE 39 39 274 C2 ist ein Schaltgetriebe mit zwei schaltbaren Zahnradstufen bekannt. Das Getriebe weist eine Getriebeeingangswelle auf, auf der ein Getriebezahnrad drehbar gelagert ist. Ferner ist ein "Schaltelement" in Form einer Schiebemuffe vorgesehen, die in einer Axialrichtung der Getriebewelle verschiebbar ist. Zwischen der Schiebemuffe und dem Zahnrad ist eine Synchronisierungseinrichtung mit konusförmigen Anlaufflächen angeordnet. Bei Handschaltgetrieben ist die Schiebemuffe mechanisch über ein Schaltgestänge mit dem Schalthebel gekoppelt. Bei automatisierten Handschaltgetrieben erfolgt der Gangwechsel durch hydraulische, elektrische oder pneumatische Aktuatoren. Die Schaltkraft wird dabei über Hebel, Schwingen, Kurvenscheiben o. ä. an die Schiebemuffe des jeweiligen Gangpaars weitergeleitet und dort in eine translatorische Bewegung der Schiebemuffe umgesetzt. Die "innere Schaltung" herkömmlicher automatisierter Handschaltgetriebe weist also eine Vielzahl von Bauteilen auf, was sich ungünstig auf das Gewicht auswirkt. Außerdem beanspruchen die Bauteile erheblichen Bauraum.

Aus der nicht vorveröffentlichten DE 10 2004 040 230.2 ist eine elektromagnetische Schalteinrichtung bekannt, bei der das Schaltelement bzw. die Schiebemuffe aus einer Mittel- bzw. Neutralstellung zunächst durch Bestromen eines Elektromagneten in eine erste Synchronisierstellung gezogen wird. Wenn das zu schaltende Zahnrad synchronisiert ist, wird der Elektromagnet umgepolt und die Schiebemuffe in eine der ersten Verschieberichtungen entgegen gesetzte zweite Verschieberichtung in eine Eingriffs- bzw. Schaltstellung verschoben, in der das zu schaltenden Zahnrad drehfest mit seiner zugeordneten Welle verbunden ist.

Aufgabe der Erfindung ist es, eine elektromagnetische Schalteinrichtung zu schaffen, bei der ein günstiger "Schaltkraft-Schaltweg-Verlauf" erreicht wird.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die elektromagnetische Schalteinrichtung gemäß der Erfindung weist ein Schaltelement auf, das in einer Axialrichtung verschieblich angeordnet ist. Bei dem Schaltelement kann es sich um eine Schiebemuffe handeln, ähnlich der Schiebemuffe, wie sie in der oben erwähnten DE 39 39 274 C2 beschrieben ist. Das Schaltelement bzw. die Schiebemuffe kann mindestens eine erste und eine zweite Verschiebestellung einnehmen. Die Schalteinrichtung weist ferner einen Stator auf, der sich in einer Umfangsrichtung des Schaltelements zumindest über einen Teilumfang des Schaltelements erstreckt. Ferner ist ein Permanentmagnet vorgesehen, der in Axialrichtung magnetisiert ist. "In Axialrichtung magnetisiert" bedeutet, dass eine Verbindungslinie zwischen dem Nordpol und dem Südpol des Permanentmagneten parallel zu der oben genannten Axialrichtung ist. Der Permanentmagnet kann mit dem Schaltelement verbunden oder getriebefest, d. h. fest in Bezug auf ein Getriebegehäuse angeordnet sein. Vorzugsweise ist der Permanentmagnet mit dem Schaltelement verbunden. Ferner ist ein erster und ein zweiter Elektromagnet vorgesehen. Die beiden Elektromagneten sind "radial außerhalb" des Schaltelements und in Axialrichtung versetzt zueinander angeordnet. Die beiden Elektromagneten können derart bestromt werden, dass ihre Magnetfelder einander entgegengesetzt gerichtet sind. Bei Bestromung der Elektromagneten ist, in Axialrichtung gesehen, die "Polfolge" also entweder Nord-Süd-Süd-Nord oder Süd-Nord-Nord-Süd. Durch entgegen gesetzte Bestromung der beiden Elektromagneten wird das Schaltelement also durch den einen Elektromagneten in eine Richtung gezogen und gleichzeitig durch den anderen Elektromagneten, der eine abstoßende Kraft auf den Permanentmagneten ausübt, in dieselbe eine Richtung gedrückt.

Durch die gegensinnige Bestromung der Spulen der beiden Elektromagnete wird also in der einen Hälfte des Magnetsystems eine abstoßende Wirkung auf das Schaltelement ausgeübt, während in der anderen Hälfte des Magnetsystems das Schaltelement angezogen wird. Die beiden Spulen können von demselben Strom durchflossen sein. Bei einer symmetrischen geometrischen Anordnung ergibt sich somit auch ein symmetrischer Kraftverlauf in Richtung beider Endstellungen des Schaltelements. Die Schalteinrichtung muss jedoch nicht notwendigerweise symmetrisch ausgeführt sein. Denkbar ist auch, dass sich die Elektromagneten hinsichtlich ihrer Windungszahl, ihrer Stromstärke, Luftspaltbreite, ihrer Materialien etc. unterscheiden.

Mit einem derartigen "Doppelelektromagneten" ergibt sich im Vergleich zum Stand der Technik eine schnellere Beschleunigung des Schaltelements aus einen Endlagen heraus. Insgesamt wird durch einen derartigen Doppelelektromagneten eine günstigere Schaltkraft-Schaltweg-Kennlinie erreicht, was ein komfortableres und schnelleres Einlegen bzw. Auslegen eines Getriebegangs ermöglicht.

Es sei ausdrücklich darauf hingewiesen, dass der Permanentmagnet nicht notwendigerweise mit dem Schaltelement und die beiden Elektromagneten nicht notwendigerweise getriebefest bzw. ortsfest relativ in Bezug auf ein Getriebegehäuse angeordnet sein müssen. Grundsätzlich ist natürlich auch eine umgekehrte Anordnung denkbar, bei der die Elektromagneten an dem Schaltelement und der Permanentmagnet getriebefest angeordnet sind.

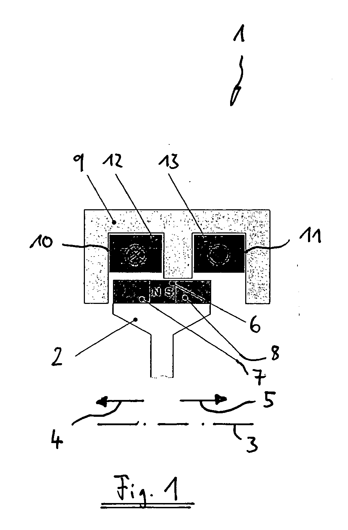

Im folgenden wird die Erfindung im Zusammenhang mit der Zeichnung näher erläutert. Die einzige Figur 1 zeigt in schematischer Darstellung das Grundprinzip der Erfindung.

Figur 1 zeigt eine elektromagnetische Schalteinrichtung 1 mit einem Schaltelement 2, bei dem es sich beispielsweise um eine Schiebemuffe handeln kann, mit der ein Gang eines Getriebes eingelegt bzw. ausgelegt werden kann. Das Schaltelement ist in einer Axialrichtung 3 verschieblich angeordnet. Es kann also wahlweise in Richtung des Pfeils 4 oder in die entgegengesetzte Richtung in Richtung des Pfeils 5 verschoben werden. An einem Außenumfang des Schaltelements 2 ist ein ringförmiger Permanentmagnet 6 angeordnet. Der Permanentmagnet 6 ist in Axialrichtung magnetisiert. Der Permanentmagnet 6 ist zwischen zwei als "Ankerplatten" fungierenden "Ankerringen" 7, 8 angeordnet.

Radial außerhalb des Schaltelements 2 ist ein Joch 9 angeordnet. Das Joch 9 ist ortsfest im Getriebe, d. h. ortsfest in Bezug auf z. B. ein Gehäuse des Getriebes. In dem Joch 9 sind zwei in Axialrichtung voneinander beabstandete ringförmige Ausnehmungen 10, 11 vorgesehen. In jeder der beiden Ausnehmungen 10, 11 ist jeweils eine Ringspule 12, 13 angeordnet. Die beiden Ringspulen 12, 13 und das Joch 9 bilden zwei Elektromagnete. Die beiden Ringspulen 12, 13 können einander entgegengesetzt bestromt werden, so dass, in Axialrichtung gesehen, die Polfolge der beiden Elektromagneten entweder Nord-Süd-Süd-Nord oder Süd-Nord-Nord-Süd ist.

In der in Figur 1 gezeigten Stellung ist das Schaltelement 2 aus seiner Mittelstellung nach links verschoben. Wenn die Elektromagneten so bestromt werden, dass sich die Polfolge Nord-Süd-Süd-Nord einstellt, wird das Schaltelement 2 von dem linken Elektromagneten, d. h. von der Ringspule 12 nach links gezogen und von dem rechten Elektromagneten, d. h. von der Ringspule 13 nach links gedrückt. Bei umgekehrter Bestromung der Elektromagneten wird das Schaltelement 2 von der Ringspule 13 nach rechts gezogen und von der Ringspule 12 nach rechts gedrückt.

## Patentansprüche

1. Elektromagnetische Schalteinrichtung (1) für Getriebe mit
einem Schaltelement (2), das in einer Axialrichtung (3) verschieblich angeordnet ist, wobei das Schaltelement (2) mindestens eine erste und eine zweite Verschiebestellung einnehmen kann,
einem Permanentmagnet (6), der in Axialrichtung magnetisiert ist und der entweder mit dem Schaltelement (2) verbunden oder ortsfest in Bezug auf das Getriebe angeordnet ist,
einem ersten und einem zweiten Elektromagnet (12, 13) die in Axialrichtung (3) versetzt zueinander angeordnet sind und die, wenn der Permanentmagnet (6) mit dem Schaltelement (2)verbunden ist, ortsfest in Bezug auf das Getriebe angeordnet sind bzw. die, wenn der Permanentmagnet (6) ortsfest im Getriebe angeordnet ist, mit dem Schaltelement (2) verbunden sind, wobei die beiden Elektromagneten (12, 13) derart bestrombar sind, dass ihre Magnetfelder einander entgegengesetzt gerichtet sind.

2. Elektromagnetische Schalteinrichtung nach Anspruch 1, **dadurch gekennzeichnet, dass** der Permanentmagnet (6) fest mit dem Schaltelement (2) und die beiden Elektromagneten (12, 13) fest in Bezug auf ein Gehäuse des Getriebes angeordnet sind.

3. Elektromagnetische Schalteinrichtung nach einem der Ansprüche 1 oder 2, **dadurch gekennzeichnet, dass** ein ringförmiges Joch (9) vorgesehen ist, das zwei in zwei ringförmige in Axialrichtung voneinander beabstandete Ausnehmungen (10, 11) aufweist, in denen jeweils eine ringförmige Magnetspule (12, 13) angeordnet ist.
